(19) Europäisches Patentamt
European Patent Office
Office européen des brevets

(11) EP 4 420 775 B1

(12) EUROPEAN PATENT SPECIFICATION

(45) Date of publication and mention of the grant of the patent:
**16.04.2025 Bulletin 2025/16**

(21) Application number: **23163169.8**

(22) Date of filing: **21.03.2023**

(51) International Patent Classification (IPC):
***B01J 23/52*** *(2006.01)* ***B01J 35/23*** *(2024.01)*
***B01J 35/45*** *(2024.01)* ***C01G 7/00*** *(2006.01)*

(52) Cooperative Patent Classification (CPC):
**B01J 23/52; B01J 35/23; B01J 35/45; C01G 7/00;**
B01J 2235/30; C01P 2004/84

# (54) METHOD FOR PRODUCING NANOMETRIC GOLD (III) OXIDE PARTICLES

VERFAHREN ZUR HERSTELLUNG VON GOLD (III) OXID NANOPARTIKLEN

PROCEDE DE PRODUCTION DES NANOPARTICULES EN OXYDE D' OR (III)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.02.2023 PL 44384523**

(43) Date of publication of application:
**28.08.2024 Bulletin 2024/35**

(73) Proprietor: **Akademia Gorniczo-Hutnicza im. Stanislawa Staszica w Krakowie**
**30-059 Krakow (PL)**

(72) Inventors:
- **LUTY-BLOCHO, Magdalena**
  **32-031 Mogilany (PL)**
- **SZOT, Aleksandra**
  **31-975 Kraków (PL)**
- **RUTKOWSKI, Bogdan**
  **30-611 Kraków (PL)**

(74) Representative: **Augustyniak, Magdalena Anna et al**
**Polservice**
**Kancelaria Rzecznikow Patentowych sp. z o.o.**
**Bluszczanska 73**
**00-712 Warszawa (PL)**

(56) References cited:
**KR-A- 20130 122 290**

- **LUTY-BLOCHO M ET AL: "Gold Nanoparticles Formation via Au(III) Complex Ions Reduction with l-Ascorbic Acid", INTERNATIONAL JOURNAL OF CHEMICAL KINETICS, WILEY, NEW YORK, NY, US, vol. 49, no. 11, 13 September 2017 (2017-09-13), pages 789 - 797, XP071657975, ISSN: 0538-8066, DOI: 10.1002/KIN.21115**
- **L.K. ONO ET AL: "Formation and Thermal Stability of Au2O3 on Gold Nanoparticles: Size and Support Effects", JOURNAL OF PHYSICAL CHEMISTRY C, vol. 112, no. 12, 27 March 2008 (2008-03-27), pages 4676 - 4686, XP055123950, ISSN: 1932-7447, DOI: 10.1021/jp711277u**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 420 775 B1

## Description

The subject matter of the invention is a method for producing nanometric gold (III) oxide particles, intended for use, among others, in catalysis, or as a semiconductor in photochemistry and electronics, and as an oxygen carrier for combustion processes.

Gold (III) oxide of the molecular formula $Au_2O_3$ is an inorganic compound having redbrown color, insoluble in water. It has a rhombic crystallographic structure, the density of 11.34 g/cm$^3$ at 20°C and the melting point of 298°C. Such a structure and the presence of oxygen in the crystallographic lattice affect the unique catalytic properties of $Au_2O_3$. In addition, the energy gap value of 0.85 eV causes that this material has the semiconductor properties, which is known, for example, from the publication by H. Shi, et al., entitled: "Properties of the gold oxides Au2O3 and Au2O: first-principles investigation", Phys. Rev., 2007, B 75 205125.

As described in the publication by O. Kubaschewski, C.B. Alcock, P.J. Spencer, entitled "Materials Thermochemistry, Sixth Edition", ed. Pergamon 1993, from the thermodynamic point of view, the spontaneous oxidation process of gold and the synthesis of gold (III) oxide as the product under the normal conditions (T = 298 K, p = 1 atm) is practically impossible. In addition, gold (III) oxide is known to be an unstable compound - this compound is only stable at the temperature of 16K. In order to produce gold (III) oxide on a macrometric scale, the process must be carried out in strictly thermodynamically controlled conditions, relaying on the oxidation of gold at high temperature in an oxygen atmosphere and with the use of appropriate techniques.

Currently, gold (III) oxide is produced, for example, in the process of metal (Au) surface treatment with an oxygen-containing plasma, as described in the publication by B. Koslowski et al., entitled: "Oxidation of Preferentially (111)-Oriented Au Films in an Oxygen Plasma Investigated by Scanning Tunneling Microscopy and Photoelectron Spectroscopy", Surf. sci. 2001, 475, 1-10. The authors of the above-mentioned publication produced gold (III) oxide by subjecting a thin gold foil to an oxygen plasma. For this purpose, they used Plasma Electronics P300 and a gas in the pressure range from 1 to 3 mbar.

In turn, J. Pireaux et al. in the publication entitled "Electron Spectroscopic Characterization of Oxygen Adsorption on Gold Surfaces", Surf. sci. 1984, 141, 221-232, described a method for obtaining gold oxide in the form of $Au_2O_3$ by sputtering reactive oxygen in a UHV (Ultra High Vacuum) compatible chamber. The authors of the work showed that the obtained oxide decomposes under the influence of thermal treatment.

In another work by A. Krozer and M. Rodahl, entitled: "X-ray photoemission spectroscopy study of UV/ozone oxidation of Au under ultrahigh vacuum conditions", Journal of Vacuum Science & Technology A 15, 1704 (1997), $Au_2O_3$ was obtained by exposing the gold surface to highly reactive ozone. In this procedure, Au films were oxidized under UHV conditions by exposing them to UV radiation and ozone. The Au films were characterized by X-ray photoelectron spectroscopy. It was observed that as the result of the carried out oxidation process, the gold surface becomes heterogeneous, and as the result of chemisorption, some of the oxygen exists in the free form. The rest of the adsorbed oxygen formed the layer of gold oxide with the stoichiometry similar to $Au_2O_3$, having few millimeters on average. Both the oxide and the chemisorbed oxygen were slowly removed when heated to 150°C.

In turn, in the work by E. Irissou et al., entitled: "Gold oxide thin film grown by pulsed laser deposition in an O2 atmosphere", Thin Solid Films, Volume 472, Issues 1-2, 24 January 2005, Pages 49-57 , thin layers of gold (III) oxide were obtained by the pulsed laser deposition method in an $O_2$ atmosphere. The background gas pressure was varied in the range from 6.7 to 119.7 Pa, and the distance from a target to a substrate was kept at the constant level of 30 mm. It was noticed that the resulting gold oxide $Au_2O_3$ was unstable and decomposed slowly at room temperature under the influence of surrounding atmosphere.

From the publication by M. Tchaplyguine et al., entitled "Gold Oxide Nanoparticles with Variable Gold Oxidation State", J. Phys. Chem. C 2015, 119, 16, is also known a method for producing nanoparticles containing gold (III) oxide by reactive magnetron sputtering in the presence of reactive gas.

From the patent application KR20130122290 A is known a method for producing metal oxide nanoparticles, which comprises the following steps: mixing a doubly hydrophilic block copolymer with a metal precursor in a solvent, then adding a base to obtain a suspension, adding a reducing agent dropwise to the suspension and mixing to form hydrated metal oxide nanoparticles, and in the final step, heating the metal oxide nanoparticles at a temperature of 200-600°C. The copolymer comprises a polymer selected from the group: poly(ethylene oxide)-b-poly(acrylic acid) (PEO-b-PAA), poly(ethylene oxide)-b-poly(methacrylic acid) (PEO-b-PMAA), poly(ethylene glycol)-b-poly(ethyleneimine) (PEG-b-PEI), poly(ethylene glycol)-b-poly(aspartic acid) (PEG-b-PAsp), poly(dimethylaminoethyl methacrylate)-b-poly(dihydropropyl methacrylate) (PDMAEMA-b-PHMA), poly(acrylic acid)-b-polyacrylamide (PAA-b-PAM), poly(acrylic acid)-b-poly(hydroxyethyl acrylate) (PAA-b-PHEA) or a mixture thereof. Preferably, the metal precursor is selected from, among others, hydrated ruthenium chloride ($RuCl_3 \cdot H_2O$), nickel chloride hexahydrate ($NiCl_2 \cdot 6H_2O$), ferric chloride hexahydrate ($FeCl_3 \cdot 6H_2O$), tin chloride ($SnCl_2$), palladium chloride ($PdCl_2$), platinum chloride ($PtCl_2$), gold chloride ($AuCl_3$), gold chloride hydrate ($HAuCl_4 \cdot 3(H_2O)$) or a mixture thereof. The base is selected from the group consisting of sodium hydroxide (NaOH), potassium hydroxide (KOH), magnesium hydroxide ($Mg(OH)_2$), calcium hydroxide ($Ca(OH)_2$) or a mixture

thereof. Hydrazine, ascorbic acid, sodium ascorbate, sodium borohydride or a mixture thereof are used as the reducing agent.

As is apparent from the prior art, the known methods for producing gold (III) oxide typically require expensive and complex devices, multiple reagents, and strictly controlled conditions necessary to be maintained during the process.

The aim of the present invention is to develop a method for producing nanometric gold (III) oxide, which, in contrast to the known solutions, does not require the use of complex and expensive devices, is simple and cheap, and is also efficient.

The gist of the method for producing nanometric gold (III) oxide particles in the form of colloidal solution, relaying on mixing a precursor solution containing Au (III) ions in the form of $HAuCl_4$ solution with a reducing agent in the form of ascorbic acid, and optionally adding particle stabilizers and auxiliary substances, is characterized in that 5-95 ml of an aqueous solution of L-ascorbic acid or D-ascorbic acid or L,D-ascorbic acid having a concentration of $2.0 \cdot 10^{-4}$ - $9.0 \cdot 10^{-3}$ mol/dm$^3$ is added to 5-95 ml of $HAuCl_4$ solution having a concentration of $1.0 \cdot 10^{-4}$ - $3.0\ 10^{-3}$ mol/dm$^3$ and a temperature in the range of 10-100°C, and is stirred at 100-700 rpm for 10-60 minutes, and a temperature is maintained at 80-100°C. Then the resulting colloidal solution is cooled down to room temperature.

Preferably, a steric particle stabilizer in the form of polyvinyl alcohol or polyvinyl pyrrolidone is added in an amount of up to 5 g per 100 ml to the cooled colloidal solution, and then is stirred until the stabilizer is completely dissolved.

Preferably, a chlorate salt in the form of $NaClO_4$ or $KClO_4$ is added in an amount of up to 0.1 g per 100 ml of solution to the colloidal solution containing the steric particle stabilizer, which is intended to remove the residues of reducing agent from the surface of nanoparticles.

Preferably, the resulting colloidal solution, after its cooling, is left for at least 12 hours in a darkroom in order to protect it from sunlight. Thanks to this, the solution retains its properties longer.

Ascorbic acid is used as a reducing agent of Au (III) ions, but also as a stabilizer of clusters of transiently formed gold Au (0), and then as a stabilizer of the resulting nanometric gold oxide $Au_2O_3$, and also as a source of ionized oxygen obtained as the result of oxidation of the dissociated form of ascorbic acid with oxygen dissolved in water. The mechanism of obtaining $Au_2O_3$, according to the invention, consists of several steps described in detail below. As the result of mixing Au (III) ions in the form of a complex, e.g. $[AuCl_4]^-$ with ascorbic acid in an acidic-neutral environment, the following reactions take place:

Step I

$$Au(III) + H_2Asc \rightarrow Au(I) + DHA$$

and/or

$$Au(III) + 2HAsc^- \rightarrow Au(I) + 2DHA$$

Step II

$$Au(I) + 1/2H_2Asc \rightarrow Au + 1/2DHA$$

and/or

$$Au(I) + HAsc^- \rightarrow Au + DHA$$

where: $H_2Asc$ - undissociated form of ascorbic acid, $DHA$ - dehydroxoascorbic acid, $HAsc^-$- partially dissociated form of ascorbic acid.

In parallel to the steps I and II, the reactions related to the dissociation of ascorbic acid and its oxidation with oxygen dissolved in a solvent and additionally catalyzed by metal ions from the group of transition metals (including gold ions) take place:

$$H_2Asc \overset{H_2O}{\longleftrightarrow} HAsc^- + H^+ \quad \text{and/or} \quad HAsc^- \overset{H_2O}{\longleftrightarrow} Asc^{2-} + H^+$$

Then, the dissociated form of ascorbic acid undergoes oxidation with oxygen dissolved in water, and the reaction products are free radicals, what is known and described in the literature: D. Cabelli, B. Bielski, entitled.: "Kinetics and

Mechanism for the Oxidation of Ascorbic Acid/Ascorbate by H02/02-Radicals. A Pulse Radiolysis and Stopped-Flow Photolysis Study", J. Phys. Chem., 1983, 87, 1809-1812, and D. Jiang et. al., entitled: "Reaction Rates and Mechanism of the Ascorbic Acid Oxidation by Molecular Oxygen Facilitated by Cu(II)-Containing Amyloid-Complexes and Aggregates, J. Phys. Chem. B 2010, 114, 4896-4903.

$$HAsc^{-} + O_2 \rightarrow HAsc^{\cdot -} + O_2^{\cdot -} + H^{+}$$

$$HAsc^{-} + O_2 + H^{+} \rightarrow DHA + H_2O_2$$

The ionic oxygen radical ($O_2^{\cdot -}$) is unstable and in an acidic environment it forms the radical $HO_2$, according to the following reaction known from Bielski's publication "Reevaluation of the spectra and kinetic properties of HO2 and O2- free radicals.", Photochemistry and Photobiology, 1978, 28, 645 - 649.

$$O_2^{\cdot -} + H^{+} \leftrightarrow HO_2^{\cdot}$$

Step III:

The obtained gold in zero oxidation state (in step II) forms clusters which, due to their small size (below 1 nm, i.e. the critical size characteristic of nanoparticles), are metastable and undergo oxidation under the conditions of the carried out synthesis as the result of the reactions with the coexisting radicals $2O_2^{\cdot -}$, $HO_2^{\cdot}$ according to the reactions below:

$$2Au + 2HO_2^{\cdot} \rightarrow Au_2O_3 + H_2O$$

and/or

$$2Au + 2O_2^{\cdot -} + 2H^{+} \rightarrow Au_2O_3 + H_2O$$

The method according to the invention allows to achieve nanometric gold (III) oxide particles with high yield, about 99%. The advantage of the proposed solution is the lack of necessity to use complex and expensive devices, which makes the method simple, cheap, and the synthesis time short. It is possible to carry out the synthesis at room temperature. The produced gold oxide nanoparticles are stable under the normal conditions (T = 20°) for about 1 week, and this time can be further extended by storing the material in a package that protects against light, such as dark glass, and optionally by lowering the temperature, e.g. by storing in a refrigerator.

The method for producing nanometric gold (III) oxide particles according to the invention is explained below in the practical embodiments and in the drawing, in which Fig. 1 shows a high-resolution image of a single $Au_2O_3$ crystal, obtained by the HRSTEM technique (*High Resolution Scanning Transmission Electron Microscopy*) along with its FFT analysis (*Fast Fourier Transform*), and Fig. 2 shows spectrum characteristic of spherical gold oxide particles, obtained in the spectrophotometric studies.

**Example 1**

5 ml of the aqueous solution of L-ascorbic acid having the concentration of $3.75 \cdot 10^{-4}$ mol/dm$^3$ was added to 95 ml of $HAuCl_4$ solution having the concentration of $1.5 \cdot 10^{-4}$ mol/dm$^3$ and the temperature of 85°C. The whole was stirred on a magnetic stirrer at 600 rpm for 30 minutes and the temperature was maintained at 100°C. The obtained colloidal solution was left to slowly cool down to room temperature. After 12 hours, the steric particle stabilizer in the form of polyvinyl alcohol powder was added in the amount of 0.0295 g per 100 ml of the solution to the solution. The solution was stirred on a magnetic stirrer until the stabilizer was completely dissolved. Then, 0.01 g of $NaClO_4$ was added and the whole was stirred again for about 5 minutes, then was left for 12 hours in a darkroom to protect it from sunlight. As the result of the carried out synthesis, the stable colloidal solution of gold (III) oxide having intense pink color was obtained.

Then, the sizes of $Au_2O_3$ particles suspended in the solution were determined using the High Resolution Scanning Transmission Electron Microscopy HRSTEM and their average diameter was determined to be 20-25 nm. In addition, the FFT analysis (Fast Fourier Transform) of the image of the microstructure of areas 1 and 2 marked in Fig. 1 was performed, enabling the measurement of the distance {0.286 nm for (1-1-3) and 0.262 nm for (1-3 1), 0.215 nm for (-1 -1 5) and 0.228 nm for (-1 3 3)} and the angles between the crystallographic planes (~55 and ~50 degrees, respectively) of the resulting product, confirming its rhombic crystallographic structure, characteristic of gold (III) oxide. In addition, in the spectrophotometric studies (UV-Vis spectrophotometer, Shimadzu), the absorption spectrum was recorded (Fig. 2) with

the maximum of peak located at 530 nm, typical of metallic particles.

The resulting colloidal solution of $Au_2O_3$ can be used immediately after production. At the temperature of 20°C it is stable for 7 days.

**Example 2**

5 ml of the aqueous solution of D-ascorbic acid having the concentration of $3.75 \cdot 10^{-4}$ mol/dm$^3$ was added to 95 ml of $HAuCl_4$ solution having the concentration of $1.5 \cdot 10^{-4}$ mol/dm$^3$ and the temperature of 95°C. The whole was stirred on a magnetic stirrer at 300 rpm for 30 minutes and the temperature was maintained at 98°C. The obtained colloidal solution was left to slowly cool down to room temperature, and then was left for 12 hours in a darkroom, in order to protect it from sunlight. As the result of the carried out synthesis, the stable colloidal solution of gold (III) oxide having intense red color and the average particle diameter of 20-25 nm, confirmed by the studies using the High Resolution Scanning Transmission Electron Microscopy HRSTEM along with its FFT analysis, was obtained. In addition, in the spectrophotometric studies, the absorption spectrum was recorded with the maximum of peak located at 530 nm, typical of metallic particles.

The resulting colloidal solution of $Au_2O_3$ can be used immediately after production. At the temperature of 20°C it is stable for 7 days.

**Example 3**

50 ml of the aqueous solution of L-ascorbic acid having the concentration of $3.75 \cdot 10^{-4}$ mol/dm$^3$ was added to 50 ml of $HAuCl_4$ solution having the concentration of $3.0 \cdot 10^{-4}$ mol/dm$^3$ and the temperature of 85°C. The whole was stirred on a magnetic stirrer at 600 rpm for 30 minutes and the temperature was maintained at 95°C. The obtained colloidal solution was left to slowly cool down to room temperature. After 12 hours, the steric particle stabilizer in the form of polyvinyl alcohol powder was added in the amount of 0.0295 g per 100 ml of the solution. The solution was stirred on a magnetic stirrer until the stabilizer was completely dissolved and was left for 12 hours in a darkroom. As the result of the carried out synthesis, the stable colloidal solution of gold (III) oxide having intense pink color and the average particle diameter of 20-25 nm, confirmed by the studies using the High Resolution Scanning Transmission Electron Microscopy HRSTEM along with its FFT analysis, was obtained. In addition, in the spectrophotometric studies, the absorption spectrum was recorded with the maximum of peak located at 530 nm, typical of metallic particles.

The resulting colloidal solution of $Au_2O_3$ can be used immediately after production. At the temperature of 20°C it is stable for 7 days.

**Example 4**

5 ml of the aqueous solution of D-ascorbic acid having the concentration of $3.0 \cdot 10^{-4}$ mol/dm$^3$ was added to 95 ml of $HAuCl_4$ solution having the concentration of $1.5 \cdot 10^{-4}$ mol/dm$^3$ and the temperature of 90°C. The whole was stirred on a magnetic stirrer at 500 rpm for 30 minutes and the temperature was maintained at 90°C. Immediately after mixing the reagents, the solution turned pink-red. The solution was stirred for another 5 minutes at 500 rpm and the temperature was maintained at 90°C. The obtained colloidal solution was left to slowly cool down to room temperature, and then was left for 12 hours in a darkroom, in order to protect it from sunlight. As the result of the carried out synthesis, the stable colloidal solution of gold (III) oxide having intense red color and the average particle diameter of 20-25 nm, confirmed by the studies using the High Resolution Scanning Transmission Electron Microscopy HRSTEM along with its FFT analysis, was obtained. In addition, in the spectrophotometric studies, the absorption spectrum was recorded with the maximum of peak located at 530 nm, typical of metallic particles.

The resulting colloidal solution of $Au_2O_3$ can be used immediately after production. At the temperature of 20°C it is stable for 7 days.

**Example 5**

5 ml of the aqueous solution of L,D-ascorbic acid having the concentration of $6.0 \cdot 10^{-3}$ mol/dm$^3$ was added to 95 ml of $HAuCl_4$ solution having the concentration of $1.5 \cdot 10^{-4}$ mol/dm$^3$ and the temperature of 90°C. The whole was stirred on a magnetic stirrer at 360 rpm for 25 minutes and the temperature was maintained at 90°C. The obtained colloidal solution was left to slowly cool down to room temperature, and then was left for 12 hours in a darkroom, in order to protect it from sunlight. As the result of the carried out synthesis, the stable colloidal solution of gold (III) oxide having intense red color and the average particle diameter of 20-25 nm, confirmed by the studies using the High Resolution Scanning Transmission Electron Microscopy HRSTEM along with its FFT analysis, was obtained. In addition, in the spectrophotometric studies, the absorption spectrum was recorded with the maximum of peak located at 530 nm, typical of metallic particles.

The resulting colloidal solution of $Au_2O_3$ can be used immediately after production. At the temperature of 20°C it

is stable for 7 days.

**Example 6**

95 ml of the aqueous solution of L-ascorbic acid having the concentration of $2.0 \cdot 10^{-4}$ mol/dm$^3$ and the temperature of 85°C was added to 5 ml of $HAuCl_4$ solution having the concentration of $3.0 \cdot 10^{-4}$ mol/dm$^3$ and the temperature of 20°C. The whole was stirred on a magnetic stirrer at 600 rpm for 30 minutes and the temperature was maintained at 100°C. The obtained colloidal solution was left to slowly cool down to room temperature. After 12 hours, the steric particle stabilizer in the form of polyvinylpyrrolidone powder was added in the amount of 0.0295 g per 100 ml of the solution. The solution was stirred on a magnetic stirrer until the stabilizer was completely dissolved. Then 0.01 g of $KClO_4$ was added and the whole was stirred again for about 5 minutes, then was left for 12 hours in a darkroom. As the result of the carried out synthesis, the stable colloidal solution of gold (III) oxide having intense pink color and the average particle diameter of 20-25 nm, confirmed by the studies using the High Resolution Scanning Transmission Electron Microscopy HRSTEM along with its FFT analysis, was obtained. In addition, in the spectrophotometric studies, the absorption spectrum was recorded with the maximum of peak located at 530 nm, typical of metallic particles.

The resulting colloidal solution of $Au_2O_3$ can be used immediately after production. At the temperature of 20°C it is stable for 7 days.

## Claims

1. A method for producing nanometric gold (III) oxide particles in the form of colloidal solution, relaying on mixing a precursor solution containing Au (III) ions in the form of $HAuCl_4$ solution with a reducing agent in the form of ascorbic acid and optionally adding particle stabilizers and auxiliary substances, **characterized in that** 5-95 ml of an aqueous solution of L-ascorbic acid or D-ascorbic acid or L,D-ascorbic acid having a concentration of - $9.0 \cdot 10^{-3}$ mol/dm$^3$ is added to 5-95 ml of $HAuCl_4$ solution having a concentration of $1.0 \cdot 10^{-4}$ - $3.0 \cdot 10^{-3}$ mol/dm$^3$ and a temperature in the range of 10-100°C, and is stirred at 100-700 rpm for 10-60 minutes, and a temperature is maintained at 80-100°C, after which the resulting colloidal solution is cooled down to room temperature.

2. The method according to claim 1, **characterized in that** a steric particle stabilizer in the form of polyvinyl alcohol or polyvinyl pyrrolidone is added in an amount of up to 5 g per 100 ml of the solution to the cooled colloidal solution, and then is stirred until the stabilizer is completely dissolved.

3. The method according to claim 2, **characterized in that** a chlorate salt in the form of $NaClO_4$ or $KClO_4$ is added in an amount of up to 0.1 g per 100 ml of the solution to the colloidal solution containing the steric particle stabilizer.

4. The method according to claim 1 or 2 or 3, **characterized in that** the resulting colloidal solution of nanometric gold (III) oxide particles, after its cooling, is left for at least 12 hours in a darkroom.

## Patentansprüche

1. Verfahren zur Herstellung nanometrischer Gold(III)-oxidpartikel in Form einer kolloidalen Lösung, das auf dem Mischen einer Au(III)-Ionen enthaltenden Vorläuferlösung in Form einer $HAuCl_4$-Lösung mit einem Reduktionsmittel in Form von Ascorbinsäure und optional dem Hinzufügen von Partikelstabilisatoren und Hilfsstoffen beruht, **dadurch gekennzeichnet, dass** 5-95 ml einer wässrigen Lösung von L-Ascorbinsäure oder D-Ascorbinsäure oder L,D-Ascorbinsäure mit einer Konzentration von $2{,}0 \cdot 10^{-4}$ - $9{,}0 \cdot 10^{-3}$ mol/dm$^3$ zu 5-95 ml einer $HAuCl_4$-Lösung mit einer Konzentration von $1{,}0 \cdot 10^{-4}$ - $3{,}0 \cdot 10^{-3}$ mol/dm$^3$ und einer Temperatur im Bereich von 10-100°C hinzugefügt wird und 10-60 Minuten lang bei 100-700 U/min gerührt wird, und eine Temperatur von 80-100°C aufrechterhalten wird, wonach die resultierende kolloidale Lösung auf Raumtemperatur abgekühlt wird.

2. Verfahren nach Anspruch 1, **dadurch gekennzeichnet, dass** ein sterischer Partikelstabilisator in Form von Polyvinylalkohol oder Polyvinylpyrrolidon in einer Menge von bis zu 5 g pro 100 ml der Lösung zu der abgekühlten kolloidalen Lösung hinzugefügt wird und dann gerührt wird, bis der Stabilisator vollständig aufgelöst ist.

3. Verfahren nach Anspruch 2, **dadurch gekennzeichnet, dass** ein Chloratsalz in Form von $NaClO_4$ oder $KClO_4$ in einer Menge von bis zu 0,1 g pro 100 ml der Lösung zu der kolloidalen Lösung hinzugefügt wird, die den sterischen Partikelstabilisator enthält.

4. Verfahren nach Anspruch 1 oder 2 oder 3, **dadurch gekennzeichnet, dass** die resultierende kolloidale Lösung aus nanometrischen Gold(III)-oxidpartikeln nach dem Abkühlen mindestens 12 Stunden lang in einer Dunkelkammer belassen wird.

## Revendications

1. Procédé de production de particules d'oxyde d'or (III) nanométriques sous forme de solution colloïdale, consistant à mélanger une solution précurseur contenant des ions Au (III) sous forme de solution $HAuCl_4$ avec un agent réducteur sous forme d'acide ascorbique et à ajouter éventuellement des stabilisateurs de particules et des substances auxiliaires, **caractérisé en ce que** 5 à 95 ml d'une solution aqueuse d'acide L-ascorbique ou d'acide D-ascorbique ou d'acide L,D-ascorbique avec une concentration de $2{,}0\cdot 10^{-4}$ - $9{,}0\cdot 10^{-3}$ mol/dm$^3$ est ajouté à 5-95 ml de solution $HAuCl_4$ avec une concentration de $1{,}0\cdot 10^{-4}$ - $3{,}0\cdot 10^{-3}$ mol/dm$^3$, une température étant dans la plage de 10 à 100°C, et est agité à 100-700 tr/min pendant 10 à 60 minutes, et une température est maintenue à 80-100°C, et puis la solution colloïdale résultante est refroidie à température ambiante.

2. Procédé selon la revendication 1, **caractérisé en ce qu'**un stabilisateur de particules stériques sous forme d'alcool polyvinylique ou de polyvinylpyrrolidone est ajouté à la solution colloïdale refroidie en une quantité allant jusqu'à 5 g pour 100 ml de solution, puis agité jusqu'à dissolution complète du stabilisateur.

3. Procédé selon la revendication 2, **caractérisé en ce qu'**un sel de chlorate sous forme de $NaClO_4$ ou de $KClO_4$ est ajouté à la solution colloïdale contenant le stabilisateur de particules stériques en une quantité allant jusqu'à 0,1 g pour 100 ml de solution.

4. Procédé selon la revendication 1 ou 2 ou 3, **caractérisé en ce que** la solution colloïdale résultante de particules nanométriques d'oxyde d'or (III), après son refroidissement, est laissée pendant au moins 12 heures dans une chambre noire.

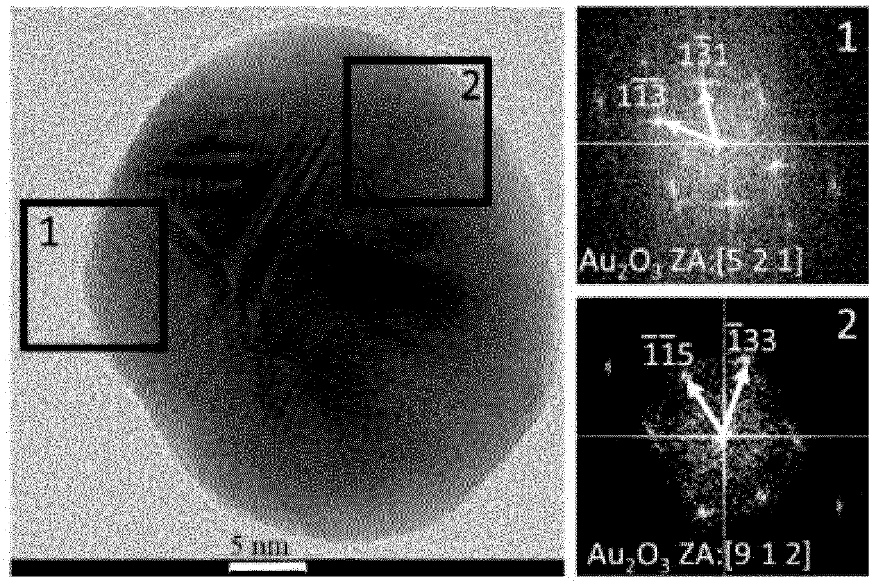
1
2
5 nm
1
1̄31
11̄3̄
Au2O3 ZA:[5 2 1]
2
1̄1̄5
1̄33
Au2O3 ZA:[9 1 2]

Fig.1

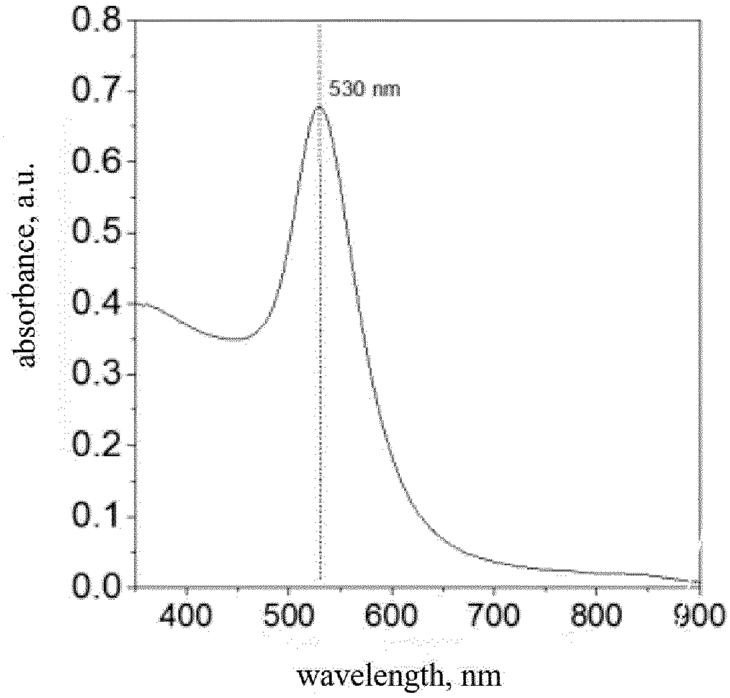
530 nm
absorbance, a.u.
wavelength, nm
0.0
0.1
0.2
0.3
0.4
0.5
0.6
0.7
0.8
400
500
600
700
800
900

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20130122290 A


### Non-patent literature cited in the description


- **H. SHI et al.** Properties of the gold oxides Au2O3 and Au2O: first-principles investigation. *Phys. Rev.*, 2007, vol. B 75, 205125
- **O. KUBASCHEWSKI** ; **C.B. ALCOCK** ; **P.J. SPENCER**. Materials Thermochemistry. Pergamon, 1993
- **B. KOSLOWSKI et al.** Oxidation of Preferentially (111)-Oriented Au Films in an Oxygen Plasma Investigated by Scanning Tunneling Microscopy and Photoelectron Spectroscopy. *Surf. sci.*, 2001, vol. 475, 1-10
- **J. PIREAUX et al.** Electron Spectroscopic Characterization of Oxygen Adsorption on Gold Surfaces. *Surf. sci.*, 1984, vol. 141, 221-232
- **A. KROZER** ; **M. RODAHL**. X-ray photoemission spectroscopy study of UV/ozone oxidation of Au under ultrahigh vacuum conditions. *Journal of Vacuum Science & Technology*, 1997, vol. A 15, 1704
- **E. IRISSOU et al.** Gold oxide thin film grown by pulsed laser deposition in an O2 atmosphere. *Thin Solid Films*, 24 January 2005, vol. 472 (1-2), 49-57
- **M. TCHAPLYGUINE et al.** Gold Oxide Nanoparticles with Variable Gold Oxidation State. *J. Phys. Chem. C*, 2015, vol. 119, 16
- **D. CABELLI** ; **B. BIELSKI**. Kinetics and Mechanism for the Oxidation of Ascorbic Acid/Ascorbate by H02/02-Radicals. A Pulse Radiolysis and Stopped-Flow Photolysis Study. *J. Phys. Chem.*, 1983, vol. 87, 1809-1812
- **D. JIANG**. Reaction Rates and Mechanism of the Ascorbic Acid Oxidation by Molecular Oxygen Facilitated by Cu(II)-Containing Amyloid-Complexes and Aggregates. *J. Phys. Chem. B*, 2010, vol. 114, 4896-4903
- Reevaluation of the spectra and kinetic properties of HO2 and O2- free radicals.. *Photochemistry and Photobiology*, 1978, vol. 28, 645-649